# EUROPÄISCHE PATENTSCHRIFT

(11) **EP 2 430 593 B1**
(45) Veröffentlichungstag und Bekanntmachung des Hinweises auf die Patenterteilung: **25.11.2015**
(21) Anmeldenummer: 10732672.0
(22) Anmeldetag: 12.05.2010
(51) Int. Cl.: G06K 19/077, G06K 19/073, G09B 5/06, B42D 1/00

(54) **INTERAKTIVES PRINTMEDIUM**
INTERACTIVE PRINT MEDIUM
SUPPORT D'IMPRESSION INTERACTIF

(30) Priorität: 14.05.2009 AT 7522009
(43) Veröffentlichungstag der Anmeldung: 21.03.2012
(73) Patentinhaber: Holweg, Karin, 8055 Graz (AT)
(72) Erfinder: Christian HOLWEG, A-8020 Graz (AT)
(74) Vertreter: Babeluk, Michael
(86) Internationale Anmeldenummer: PCT/EP2010/056525
(87) Internationale Veröffentlichungsnummer: WO 2010/130769

(56) Entgegenhaltungen:
- WO-A1-2005/045754
- WO-A1-2009/014434
- US-A1- 2005 236 489
- US-A1- 2007 152 829
- US-B1- 6 588 660

## Beschreibung

Die Erfindung bezieht sich auf ein Verfahren zum Auslesen von Zusatzinformationen zu zumindest einer Vorder- und/oder Rückseite zumindest eines Blattes eines interaktiven Printmediums, wobei in einer Ausleseeinheit über zumindest ein Signal, das von zumindest einem an zumindest einem Blatt des Printmediums angeordneten RFID-Transponder mit zumindest einer RFID-Antenne und zumindest einem RFID-Chip an die Ausleseeinheit übermittelt wird, zumindest eine Funktion ausgelöst wird, sowie ein interaktives Printmedium und eine Anordnung zum Auslesen von Zusatzinformationen hierzu.

Die WO 2006/064329 A1 beschreibt ein Printmedium mit codierten Indizes, über welche zusätzliche Informationen mit Hilfe eines Computers zum Text im Printmedium abgerufen werden können, wobei dieser Index beispielsweise ein RFID-Chip sein kann.

In der US 2004/0558275 A1 wird ein Poster beschrieben, von welchem Daten mit Hilfe eines Handgerätes abgerufen und auf einem Computer angezeigt werden können.

Nachteilig an diesen Printmedien ist, dass zum Auslesen von Zusatzinformationen stets der Leser mit einem Handgerät durch Antippen oder Überstreichen bestimmter Stellen auf einer Seite des Printmediums aktiv diese Zusatzinformationen abrufen muss. Einerseits sind hierfür zusätzliche Geräte notwendig, andererseits wird der Leser des Printmediums im Lesevorgang unterbrochen, um die Zusatzinformationen abzurufen.

Die US 2005/0272018 A1 offenbart ein Verfahren sowie Vorrichtungen der eingangs erwähnten Art zum Sammeln und Auswerten von Daten hinsichtlich der Verwendung einer Publikation, wie beispielsweise einer Zeitschrift. Die Vorrichtung umfasst hierbei Einrichtungen wie piezoelektrischer Wandler und/oder RFID-Tags, die auf einer Seite der Zeitschrift angeordnet sind.

In der US 2008/0268415 A1 sowie in der WO 2009/014434 A1 sind interaktive Bücher gezeigt, deren Seiten mit RFID-Tags versehen sind, wobei beim Öffnen der jeweiligen Seite über einen Lautsprecher Informationen zu der jeweiligen Seite hörbar gemacht werden.

Die DE 10 2005 021 477 A1 beschreibt ein Verfahren zum Herstellen eines Laminats für ein Pass-Inlay in einem Ausweisdokument, wobei eine Antenneneinrichtung für eine kontaktlose Datenübertragung im Rücken des Ausweisdokuments angeordnet ist.

In der JP 2004-314370 A schließlich ist eine Zeitschrift beschrieben, die mit RFID-Tags bestückt ist, die beispielsweise als Zutrittsberechtigungen zu Veranstaltungen usw. fungieren können.

In der WO 2007/148111 A2 schließlich wird ein Herstellungsverfahren für ein Buch mit elektrischen Elementen, die mittels leitfähiger Tinte miteinander verbunden werden, offenbart.

Die WO 2005/045754 A1 beschreibt einen Datenträger für die kontaktlose Übertragung von Informationen mit zumindest zwei Seiten, auf welchen kapazitive Elemente zur Datenübertragung angeordnet sind, die miteinander über einen elektrischen oder elektronischen Schaltkreis miteinander in Verbindung stehen. Eine ähnliche Anordnung kann auch der US 2005/0236489 A1 entnommen werden.

In der US 6,588,660 B1 ist ein Smartcard beschrieben, die mittels Berührung aktiviert oder deaktiviert werden kann.

Die oben beschriebenen Vorrichtungen weisen entweder einen komplizierten Aufbau auf oder sind fehleranfällig, weil die Unterscheidung, welcher RFID-Tag aus einer Vielzahl von RFID-Tags auszulesen ist, nur unzureichend und/oder mit erheblichem Aufwand gelöst ist.

Es ist daher Aufgabe der Erfindung, die oben beschriebenen Nachteile des Stands der Technik zu beseitigen und eine Anordnung zur Verfügung zu stellen, die selbstständig eine aufgeschlagenen Seite des Printmediums erkennt und ohne ablenkendes Hantieren mit Gerätschaften durch den Benutzer Zusatzinformationen zur Verfügung stellt.

Diese Aufgabe wird erfindungsgemäß von einem Verfahren nach Anspruch 1 gelöst.

Im Rahmen dieser Offenbarung wird unter "Blatt" sowohl der obere als auch der untere Deckel des Printmediums sowie das (die) zwischen oberen und unteren Deckel befindliche(n) Blatt (Blätter) verstanden. Als "Seite" wird jeweils die Vor der- und die Rückseite der Deckel sowie der Blätter bezeichnet. Unter "Anlagebereich" ist jener Bereich des Printmediums zu verstehen, in welchem die Ausleseeinheit mit dem zumindest einen RFID-Transponder interagiert, wobei dieser Anlagebereich im Spezialfall das gesamte Printmedium umfasst. Unter "individuelle Information" ist eine Information hinsichtlich des RFID-Transponders zu verstehen, während "Zusatzinformation" Informationen zu einer Seite, zu einem Blatt und/oder zu dem Printmedium als ganzes beinhaltet. Unter "intergraler Bestandteil des (zumindest einen) RFID-Transponders" ist zu verstehen, dass das Auslöseelement Teil des interaktiven Printmediums ist und mit dem RFID-Transponder als Einheit ausgebildet ist. Insbesondere benötigt der Benutzer keine zusätzlichen Gerätschaften neben der Ausleseeinheit und der Wiedergabeeinheit, um eine Funktionsauslösung und damit die Anzeige der Zusatzinformation zu bewirken.

Hierbei ist erfindungsgemäß vorgesehen, dass eine Funktionsauslösung durch Verstimmung der zumindest einen RFID-Antenne hervorgerufen wird. Dies erfolgt durch Berührung des Benutzers an vorhergesehenen Stellen des zumindest einen Antennenkreises des zumindest einen RFID-Transponders Eine bevorzugte Funktion der Ausleseeinheit besteht hierbei darin, eine in dem zumindest einen RFID-Chip des zumindest einen RFID-Transponders abgespeicherte individuelle Information auszulesen und an das Wiedergabegerät weiterzuleiten.

Die erfindungsgemäße Funktionsauslösung kann ebenso durch einfaches oder mehrfaches Antippen oder Überstreichen bestimmter Stellen des zumindest einen RFID-Transponders oder der Ausleseeinheit, die beispielsweise kapazitive Sensoren aufweisen, hervorgerufen werden. Diese Funktionsauslösung ist insbesondere auch dann vorteilhaft, wenn an einem Blatt des erfindungsgemäßen Printmediums mehr als einer, beispielsweise zwei drei oder mehr RFID-Transponder angeordnet sind.

Zusatzfunktionen können zudem optional durch intuitives einfaches oder mehrfaches Antippen oder Überstreichen bestimmter Stellen mit bloßen Fingern (ebenfalls ohne ablenkendes Hantieren mit Gerätschaften) ausgelöst werden, wobei bevorzugt unterschiedliche Funktionen in der Ausleseeinheit durch Berührung unterschiedlicher Stellen an dem zumindest einen RFID-Transponder oder durch unterschiedliche Berührungsabfolgen an dem zumindest einen RFID-Transponder ausgelöst werden.

Ebenso kann vorgesehen sein, dass der RFID-Transponder und/oder die Ausleseeinheit über eine entsprechende Sensorik verfügt, mit welcher durch Berühren oder Überstreichen an gekennzeichneten Stellen des RFID-Transponders oder der Ausleseeinheit die Wiedergabe der Zusatzinformation, insbesondere Videound/oder Audiodateien auf dem Wiedergabegerät beeinflusst werden können. So können beispielsweise Funktionen und Befehle wie "Start", "Stop", "Vorlauf", "Rücklauf", Eingabebestätigungen, PIN-Eingabe, oder Cursorbewegungen am Wiedergabegerät ausgelöst werden.

In einem Beispiel nicht gemäss der Erfindung ist vorgesehen, dass zumindest ein Auslöseelement, insbesondere ein Dehnelement, bei Manipulation des zumindest einen Blattes des Printmediums die Funktion in der Ausleseeinheit auslöst.

Ebenso kann vorgesehen sein, dass die Ausleseeinheit in regelmäßigen Abständen ein vorzugsweise hochfrequentes Feld (HF-Feld) zur Feststellung der Anwesenheit zumindest eines RFID-Transponders ausbildet. Hierbei ist besonders bevorzugt vorgesehen, dass in dem erfindungsgemäßen Verfahren zunächst eine Verstimmung der Antenne durch Berühren bestimmter Stellen auf der Seite durch den Benutzer erfolgt, diese Verstimmung in dem zumindest einen RFID-Chip des RFID-Transponders abgespeichert wird und diese Information auf Anfrage durch die Ausleseeinheit, bei der die Ausleseeinheit ein HF-Feld ausbildet, an die Ausleseeinheit übermittelt wird. Diese derart zeitverzögert übermittelte Information bewirkt wiederum eine Funktionsauslösung in der Ausleseeinheit, beispielsweise das Abrufen von Zusatzinformationen zu der dem RFID-Transponder zugeordnete Seite über das Internet oder aus dem RFID-Chip und Anzeigen/Abspielen dieser Zusatzinformationen auf einer mit der Ausleseeinheit in Verbindung stehende Wiedergabeeinheit.

Ebenso kann vorgesehen sein, dass die Verstimmung der zumindest einen RFID-Antenne eine unmittelbare Signalübermittlung von dem RFID-Transponder zu der Ausleseeinheit bewirkt, wodurch im Anschluss eine Funktion der Ausleseeinheit ausgelöst wird.

Bei einer ersten Variante des erfindungsgemäßen Verfahrens ruft das Wiedergabegerät über eine Internetverbindung die der Seite zugeordnete Zusatzinformation ab und zeigt anschließend diese an. Hierfür ist in dem RFID-Chip lediglich ein individueller, gegebenenfalls verschlüsselter Code abgespeichert, der dem spezifischen Printmedium (Verlag, Titel, Ausgabe, etc.) sowie jener Seite, auf der der RFID-Transponder angeordnet ist, zugeordnet ist und den Zugriff auf eine entsprechende Internetseite erlaubt. Damit benötigt der RFID-Transponder nur eine geringe Speicherkapazität, was die Herstellungskosten des RFID-Transponders deutlich reduziert.

In einer alternativen Ausführung der Erfindung ist neben der individuellen Information eine weitere zumindest einer spezifischen Seite des Printmediums zugeordnete Zusatzinformation in dem zumindest einen RFID-Chip selbst abgespeichert, wobei die Ausleseeinheit die Zusatzinformation ausliest und an das Wiedergabegerät weiterleitet, worauf anschließend die Zusatzinformation angezeigt wird. Dies erfordert zumindest einen mit höherer Speicherkapazität ausgestatteten und damit teureren RFID-Transponder, hat jedoch den Vorteil, dass keine Internetverbindung für die Anzeige der Zusatzinformation benötigt wird.

Die auf dem Wiedergabegerät anzuzeigende Zusatzinformation umfasst insbesondere Bilder, Videos, Audiodateien, Text oder zusätzliche Webpages zu dem Inhalt der entsprechenden Seite. In einer alternativen Ausführung der Erfindung ist die Zusatzinformation eine Zugangsberechtigung, insbesondere zu einer Veranstaltung oder einer Sportstätte. Hierbei wird entweder das Printmedium oder aber der entsprechende, vom Printmedium entfernte RFID-Transponder im Zugangsbereich zu der Veranstaltung oder der Sportstätte, beispielsweise eine Therme, an eine als Ausleseeinheit konfigurierte Anlage gehalten, wobei der RFID-Transponder als Eintrittskarte fungiert.

Zusätzlich oder alternativ können weitere Funktionen des RFID-Transponders vorgesehen sein. So kann der RFID-Transponder Informationen hinsichtlich einer möglichen Reservierung eines Hotelzimmers oder Tisches in einem Restaurant aufweisen, wobei beispielsweise durch Berühren des RFID-Transponders mit einer entsprechenden Sensorik an einer vorgesehenen und gekennzeichneten Stelle am RFID-Transponder oder dessen Peripherie automatisch eine Reservierungsanfrage über das Wiedergabegerät an den jeweiligen Anbieter gesendet wird, der anschließend eine Reservierungsbestätigung an das Wiedergabegerät zurücksendet.

Des Weiteren ist in einer bevorzugten Ausführung der Erfindung die Ausleseeinheit dazu eingerichtet, dass sie Daten auf den zumindest einen RFID-Chip überträgt. Diese Daten sind beispielsweise Zugangsberechtigungen oder Reservierungsbestätigungen, so dass das Printmedium, genauer gesagt der RFID-Transponder, der auch aus dem Printmedium entfernt worden sein kann, wie oben beschrieben als Eintrittskarte fungiert.

Die Aufgabe wird zudem erfindungsgemäß durch ein interaktives Printmedium, nach Anspruch 8 gelöst.

Erfindungsgemäß ist vorgesehen, dass zumindest ein Blatt des Printmediums mit einem RFID-Transponder, dessen Chip eine individuelle Information enthält, versehen ist. Des weiteren ist an einer zumindest einer Seite (Vorder- oder Rückseite) des Blattes ein Anlagebereich bestimmt, in dessen Nahbereich ein für das Auslesen der gespeicherten Information geeignetes Auslesegerät anzuordnen ist. Beim Lesen eines Printmediums, beispielsweise eines Magazins sind im aufgeschlagenen Zustand stets die Rückseite eines ersten Blattes sowie die Vorderseite eines nachfolgenden Blattes sichtbar. Die Ausleseeinheit ist nun dazu eingerichtet, zu erfassen, ob eine bestimmte Seite des erfindungsgemäßen Printmediums, der zumindest ein RFID-Transponder zugeordnet ist, aufgeschlagen bzw. für den Benutzer sichtbar ist. Diese Erfassung ist beispielsweise durch eine definierte Empfangsreichweite der Ausleseeinheit realisiert. Ist zum Beispiel die Ausleseeinheit im Bereich des unteren Deckels des Printmediums angeordnet, so sind für sie nur jene RFID-Transponder sichtbar, die innerhalb ihrer Reichweite angeordnet sind, im Falle eines aufgeschlagenen Printmediums also jene RFID-Transponder, die sich über dem unteren Deckel befinden, während jene RFID-Transponder, die sich am oberen Deckel oder an Blättern oberhalb des oberen Deckels angeordnet sind, für die Ausleseeinheit nicht sichtbar sind. Ist die Ausleseeinheit an dem oberen Deckel des Printmediums angeordnet gilt Analoges.

In einer bevorzugten Ausführung der Erfindung fungiert die zumindest eine RFID-Antenne als zumindest ein Auslöseelement, insbesondere durch Veränderung ihrer Antennencharakteristik.

Da nicht notwendigerweise jedes Blatt des Printmediums mit zumindest einem RFID-Transponder ausgestattet ist, ist bevorzugterweise der zumindest eine RFID-Transponder derart auf dem jeweiligen Blatt angeordnet, dass nicht gemäss der beanspruchten Erfindung seine RFID-Antenne sich zumindest teilweise über den zwischen zwei Blättern angeordneten Falz des Printmediums erstreckt. Beim Öffnen des Printmediums bzw. Aufschlagen oder Umblättern der entsprechenden Seite ändert sich die Antennencharakteristik der über den Falz angeordneten RFID-Antenne, während die Antennencharakteristika sämtlicher weiterer in dem Printmedium angeordneter und für die Ausleseeinheit sichtbaren RFID-Transponder unverändert bleiben. Somit kann die Ausleseeinheit durch die veränderte Antennencharakteristik dieses RFID-Transponders die geöffnete Seite eindeutig identifizieren.

Gemäss einem Beispiel nicht gemäss der beanspruchten Erfindung kann als Auslöseelement ebenfalls ein Dehnelement eingesetzt werden, das bei Verbiegung durch Aufschlagen oder Umblättern der entsprechenden Seite seinen ohmschen Widerstand verändert. Ein besonders deutliches Signal wird hierbei erhalten, wenn der Dehnstreifen beispielsweise über den Falz des Printmediums, also über zwei nebeneinander aufgeschlagenen Seite angeordnet ist. Durch das Aufschlagen oder Schließen dieser Doppelseite wird der Dehnstreifen verbogen (gestreckt oder geknickt), was wiederum eine signifikante Änderung seines Widerstandswertes und damit eine Änderung der Antennencharakteristik der RFID-Antenne zur Folge hat.

Alternativ hierzu wird gemäss einem Beispiel nicht gemäss der beanspruchten Erfindung zumindest ein kapazitiver Sensor vorgeschlagen, dessen Kapazitätswerte sich in Abhängigkeit vom Vorhandensein eines aufliegenden Blattes ändern. Ist also eine Seite bzw. dessen RFID-Transponder mit einem oder mehrere derartiger Kapazitätssensor ausgestattet, so ändern sich deren Werte, sobald eine auf dieser Seite aufliegende Vorgängerseite durch Umblättern entfernt wird.

Ist nicht jede Seite des Printmediums mit einem RFID-Transponder ausgestattet, so ist nicht gemäss der Erfindung alternativ zu den vorgenannten Auslöseelementen vorgesehen, dass das Auslöseelement als zusätzlicher, auf einer ersten Seite angeordneten RFID-Transponder ausgeführt ist, der mit einem zweiten RFID-Transponder, der auf einer der ersten Seite nachfolgenden Seite des interaktiven Mediums angeordnet ist, ein individuelles Transponderpaar bildet. Die Ausleseeinheit reagiert auf die Trennung des Transponderpaares durch Aufblättern der entsprechenden Seite, so dass nur noch der zweite RFID-Transponder für die Ausleseeinheit sichtbar ist, mit dem Auslesen der in dem zweiten RFID-Transponder abgespeicherten Information. Der erste, "stumme" RFID-Transponder enthält üblicherweise keine Informationen.

In eine nicht gemäss der Erfindung alternativen und kostengünstigeren Beispiel wird anstatt eines "stummen" RFID-Transponders eine hochfrequente Struktur, beispielsweise eine leitfähige Folie eingesetzt, deren Vorhandensein bzw. Fehlen (z.B. durch Umblättern des entsprechenden Blattes des Printmediums) die Antennencharakteristika des jeweiligen RFID-Transponders beeinflusst.

Des Weiteren wird die erfindungsgemäße Aufgabe durch eine Anordnung nach Anspruch 9 gelöst, wobei zumindest eine Ausleseeinheit sowie ein Wiedergabegerät für digitale Daten vorgesehen sind, die zumindest eine Ausleseeinheit an zumindest einer Anlagefläche des Printmediums anordenbar ist, und die zumindest eine Ausleseeinheit mit dem Wiedergabegerät in Verbindung steht. Die erfindungsgemäße Anordnung hat den Vorteil, dass die beispielsweise an der Rückseite des Printmediums angeordnete Ausleseeinheit, auch "Interrogator" genannt, beim Lesen des Printmediums selbstständig die jeweilige aufgeschlagene Seite erkennt, die in dem auf der entsprechenden Seite angebrachten RFID-Transponder abgespeicherte Information ausliest und an ein Wiedergabegerät, beispielsweise ein Computer, ein Notebook, ein PDA oder ein Mobiltelefon weiterleitet.

Diese Information ist insbesondere ein individueller, im RFID-Chip des RFID-Transponders abgespeicherter Code, der dem spezifischen Printmedium (Verlag, Titel, Ausgabe, etc.) sowie jener Seite, auf der der RFID-Transponder angeordnet ist, zugeordnet ist. Damit kann die Zusatzinformation zu der entsprechenden Seite ohne aktives Zutun des Benutzers am Wiedergabegerät angezeigt werden. Die Ausleseeinheit kann entweder entfernbar oder fix und damit unlösbar an dem Anlagebereich des Printmediums angeordnet sein. So wird beispielsweise die Ausleseeinheit gemeinsam mit dem Printmedium angeboten und verkauft, wobei die Ausleseeinheit als dünne Plastikfolie, ausgestattet mit einer RFID-Antenne sowie einem Verbindungselement zur Verbindung mit einem Wiedergabegerät auf der Rückseite des Printmediums, dem vorgesehenen Anlagebereich, aufgeklebt ist.

Als Beispiele für eine entfernbare Ausleseeinheiten sind insbesondere eine stabile Platte zu nennen, die gleichzeitig als Leseunterlage fungiert, oder aber ein flexibler Streifen, der als Einlage, wie ein Lesezeichen, vorzugsweise zwischen dem letzten und dem vorletzten Blatt eingelegt wird.

Ebenso kann vorgesehen sein, dass die Ausleseeinheit in einer Schreibtischauflage oder direkt in einer Tischplatte, beispielsweise eines Lesepults in einem öffentlichen Bereich, integriert ist, auf die das Printmedium auflegbar ist. Das Printmedium ist hierbei derart aufzulegen, dass die Ausleseeinheit an der vorgesehenen Anlagefläche des Printmediums angeordnet ist, um ein Auslesen der jeweiligen RFID-Transponder-Informationen zu ermöglichen.

Die Verbindung der Ausleseeinheit mit dem Wiedergabegerät kann über eine Kabelverbindung oder aber auch kabellos erfolgen. Insbesondere die kabellose Verbindung hat den Vorteil, dass der Benutzer der erfindungsgemäßen Anordnung während des Lesens nicht bzw. lediglich im Rahmen des Empfangsbereichs des Wiedergabegeräts für das Signal der Ausleseeinheit in seiner Bewegung eingeschränkt ist.

Im folgenden wird anhand von nichteinschränkenden Ausführungsbeispielen mit zugehörigen Figuren die Erfindung näher erläutert. Darin zeigen:
- Fig. 1: eine erste schematische Darstellung einer ersten Ausführung der erfindungsgemäßen Anordnung;
- Fig. 2: bis Fig. 5 weitere Ausführungsvarianten der erfindungsgemäßen Anordnung; Fig. 6 - 9 und 11 weitere Beispiele eines nicht erfindungsgemässen Printmediums
- Fig. 10: schematische Darstellung einer Ausführung des erfindungsgemäßen Printmediums.

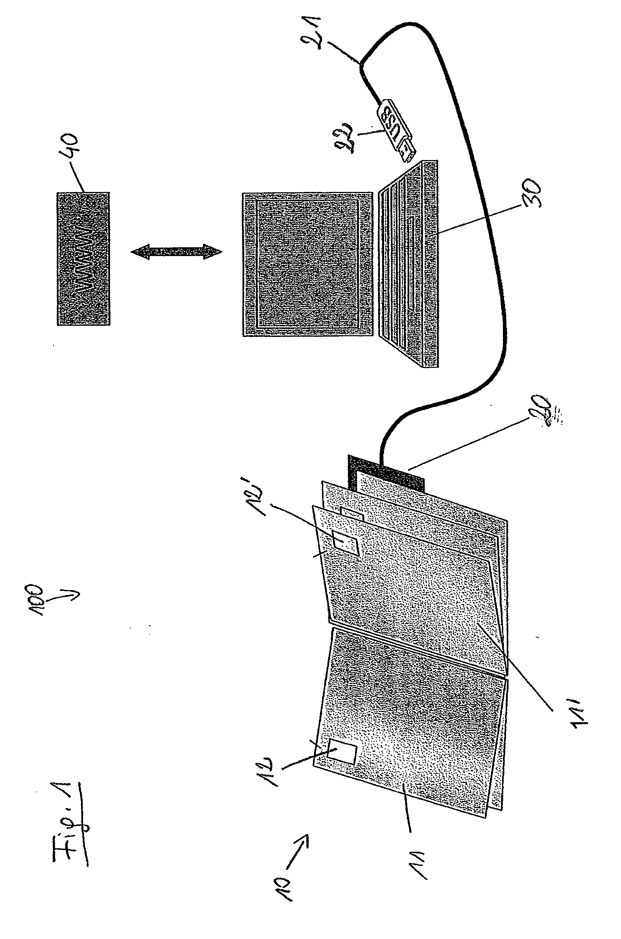

Wie in Fig. 1 dargestellt, weist die erfindungsgemäße Anordnung 100 ein interaktives Printmedium 10 auf, auf dessen Seiten 11, 11' jeweils ein RFID-Transponder 12, 12' aufgebracht sind. In der vorliegenden Darstellung sind die RFID-Transponder 12, 12' auf der Seite 11, 11' aufgebracht, beispielsweise geklebt. Alternativ hierzu können sie auch zwischen zwei miteinander verklebten Seiten eingebettet sein.

Jeder RFID-Transponder 12, 12' besteht aus einem Chip sowie einer Antenne, und ist mit einer individuellen Information, insbesondere in Form eines digital gespeicherten Codes, ausgestattet, der dem spezifischen Printmedium 10 (Verlag, Titel, Ausgabe, ...) sowie der Seite 11, 11', auf der er sich befindet, zugeordnet ist. Auf der Rückseite des Printmediums 10 ist ein sogenannter Interrogator 20 angeordnet, der als Ausleseeinheit für die in den jeweiligen RFID-Transpondern 12, 12' abgespeicherten digitalen Informationen fungiert. In der in Fig. 1 dargestellten Ausführung ist dieser Interrogator 20 eine dünne Plastikfolie mit eingebetteter RFID-Antenne und weist eine Kabelverbindung 21 mit einem USB-Stecker 22 auf. Über diese Kabelverbindung 21 wird erfindungsgemäß der Interrogator 20 mit beispielsweise einem Notebook 30 verbunden, der wiederum mit dem Internet 40 in Verbindung steht.

Alternativ kann der Interrogator 20 ähnlich einem Lesezeichen vorzugsweise zwischen die beiden letzten Blätter des Printmediums eingelegt und gegebenenfalls fixiert werden.

In einer weiteren Ausführung ist der Interrogator 20 fix in einer Auflagefläche, beispielsweise einer Tischplatte eingebaut (nicht dargestellt). Hierbei wird der Interrogator in zeitlich festgelegten Abständen aktiviert (beispielsweise alle 0,5 s), wobei kurzfristig ein Hochfrequenzfeld (HF-Feld) erzeugt wird, um festzustellen, ob sich ein RFID-Transponder oder aber auch ein Near Field Communication (NFC)-Gerät (Handy, Notebook, Kamera, Fernsteuerung etc.) in Reichweite befindet. Erfolgt eine Rückmeldung, also eine Veränderung des HF-Feldes, so bleibt das HF-Feld so lange aufrecht bis keine Rückmeldungen mehr einlangen. Das HF-Feld kann nun beispielsweise zur Energieversorgung von passiven Elementen, insbesondere der RFID-Transponder 12, 12' im interaktiven Printmedium 10 verwendet werden. Zusätzlich kann der in der Tischplatte angeordnete Interrogator dazu eingerichtet sein, NFC-Geräte aufzuladen, sobald sie in seinem Wirkbereich sind, wobei sich sein HF-Feld abschaltet, sobald dieses zur Gänze aufgeladen sind. Dies hatte den Vorteil, dass diese Geräte ohne Netzteil vom Interrogator als kontaktlose Ladeeinheit aufgeladen und/oder beispielsweise im Fall von Notebooks betrieben werden können.

Erfindungsgemäß wird das interaktive Printmedium 10 vom Benutzer auf den Interrogator 20 gelegt, so dass die Rückseite (des unteren Deckels) des Printmediums auf den Interrogator 20 zu liegen kommt. Ebenso kann vorgesehen sein, dass der Interrogator 20 fest verbunden mit dem Printmedium 10 ausgeführt ist. Solange das Printmedium 10 nicht aufgeblättert wird, sind sämtliche in dem Printmedium 10 angeordneten RFID-Transponder 12, 12' oberhalb des Interrogators 20 angeordnet und somit für diesen erfassbar.

Wird nun eine Seite 11 aufgeschlagen, so reduziert sich die Anzahl der für den Interrogator 20 sichtbaren RFID-Transponder 12, 12', so dass der Interrogator 20 über ein entsprechendes Ausschlussverfahren erkennt, welche Seite 11, 11' aufgeschlagen ist. Die in dem entsprechenden RFID-Transponder 12' abgespeicherte Information wird ausgelesen und über die Kabelverbindung 21 an den Laptop 30, der als Wiedergabegerät fungiert, übermittelt.

Das Notebook 30 gibt diese Seiteninformation gemeinsam mit der Spezifikation des Printmediums 10 über das Internet 40 an einen Mediaserver weiter, der sodann zugehörige Mediadaten an das Notebook 30 übermittelt, auf welchem diese seitenbezogenen Zusatzinformationen, beispielsweise Bilder, Videos, Audiodateien, Text oder zusätzliche Webpages darstellt. Damit erhält der Benutzer der erfindungsgemäßen Anordnung 100 zusätzliche Informationen aus dem Internet für die entsprechende Seite 11, 11'.

Ist beispielsweise in dem Printmedium 10 lediglich ein einziger RFID-Transponder 12' mit einem individuellen, digital gespeicherten Code angeordnet, so ist in einer weiteren nicht dargestellten Ausführungsvariante ein zweiter RFID-Transponder 12 in der vorhergehenden Seite 11 angeordnet, so dass ein Transponderpärchen gebildet wird. Wird nun jene Seite 11' aufgeschlagen, die mit einem RFID-Transponder 12' ausgestattet ist, wobei für diese Seite 11' zusätzliche Informationen über das Internet 40 abrufbar sind, so erfasst der Interrogator 20 nur noch einen Transponder 12', wodurch angezeigt wird, welche Seite 11' aufgeschlagen wurde. Hierauf leitet wiederum der Interrogator 20 die entsprechende Seiteninformation an das Wiedergabegerät 30 weiter und die entsprechenden Zusatzinformationen werden auf dem Wiedergabegerät 30 angezeigt. Generell gilt, dass bei dieser Ausführungsvariante der Erfindung, sofern nicht alle Seiten mit RFID-Transpondern 12, 12' ausgestattet sind, pro zu erkennender Seite 11, 11' ein Transponderpaar erforderlich ist.

Ebenso kann vorgesehen sein, dass das interaktive Printmedium 10 mit RFID-Transpondern 12, 12' mit höherer Speicherkapazität ausgestattet ist, so dass auch ohne Internetverbindung mediale Daten an den Interrogator 20 und in Folge das Wiedergabegerät 30 zur Wiedergabe übermittelt werden. Diese medialen Daten können beispielsweise Audiofiles als Lesehilfe oder Leseersatz oder Bilder bzw. Videos als visuelle Zusatzinformation sein.

Ebenso kann vorgesehen sein, dass auf dem RFID-Transpondern 12, 12' zusätzliche Berechtigungscodes vorgesehen sind, die beispielsweise den Zugang auf spezielle Internetseiten ermöglichen. Alternativ hierzu ist ein in dem Printmedium 10 angeordneter RFID-Transponder 12, 12' als Zugangsberechtigung zu Veranstaltungen oder Sportstätten ausgeführt. In diesem Fall muss der Zugangsbereich der Veranstaltungs- oder Sportstätte ein kompatibles Interrogatorsystem aufweisen, dass beim Präsentieren des Printmediums 10 mit entsprechendem RFID-Transponder 12 einen auf dem RFID-Transponder 12, 12' abgespeicherten Berechtigungscode auslesen und gegebenenfalls den Zugang freigeben kann.

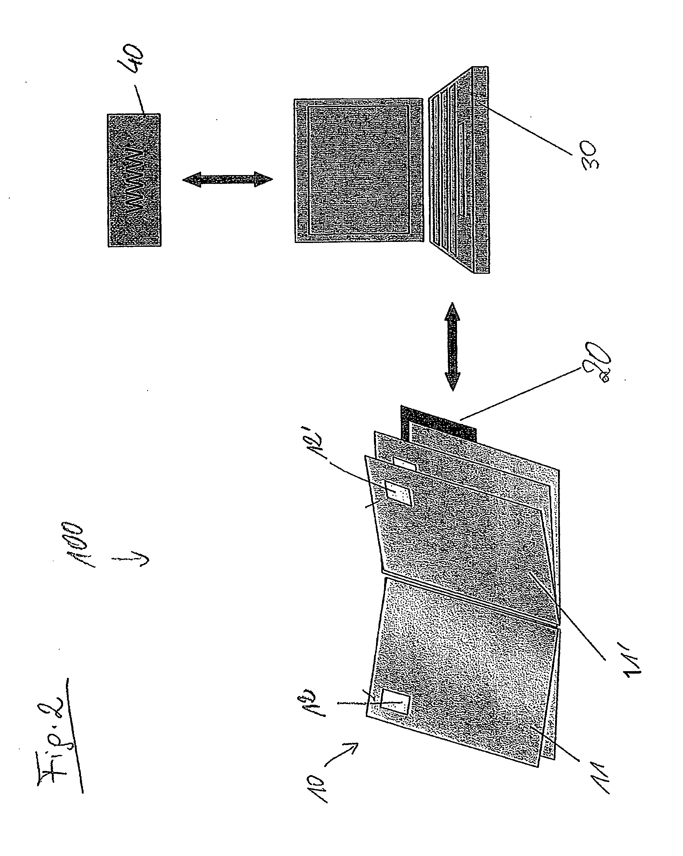

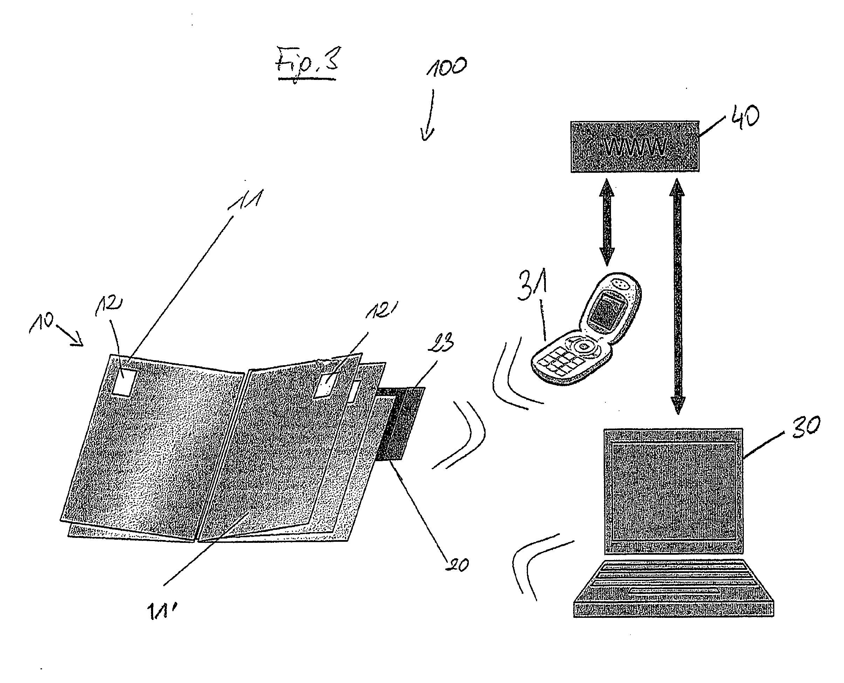

Bei der in der Fig. 2 dargestellten Ausführungsvariante der erfindungsgemäßen Anordnung 100 erfolgt die Datenübertragung zwischen Interrogator 20 und Wiedergabegerät 30 drahtlos, beispielsweise über eine Bluetooth-Verbindung. Hierbei ist insbesondere an dem Interrogator 20 ein Bluetooth-Konverter 23 angeordnet. Bei dieser Ausführung wird das Bluetooth-Signal beispielsweise über eine entsprechende Bluetooth-Empfangseinheit in dem Notebook 30 empfangen, woraufhin die entsprechenden Informationen aus dem Internet 40 heruntergeladen bzw. angezeigt werden. Alternativ hierzu kann auch ein Bluetooth-fähiges Mobiltelefon 31, das für die Anzeige von Internetinhalten geeignet ist, als Wiedergabegerät fungieren (Fig. 3).

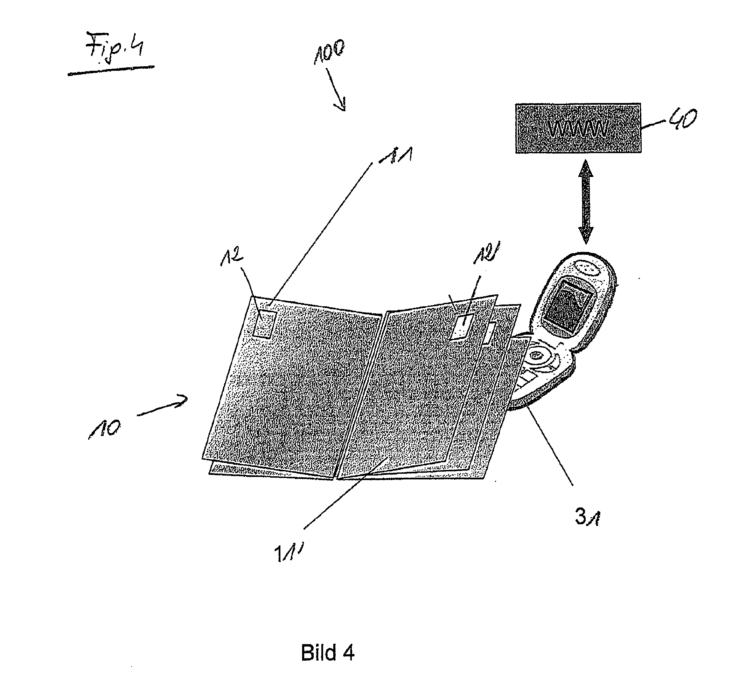

In Fig. 4 ist wiederum eine weitere Ausführungsvariante der Erfindung dargestellt, wobei hier ein mit integrierter NFC (Near Field Communication)-Funktion ausgestattetes Mobiltelefon 31 als Interrogator und gleichzeitig als Wiedergabegerät fungiert. Diese Ausführung hat den Vorteil, dass der Benutzer lediglich das Printmedium 10 sowie das Mobiltelefon 31 ohne weiteres Equipment zum Auslesen von Zusatzinformationen benötigt.

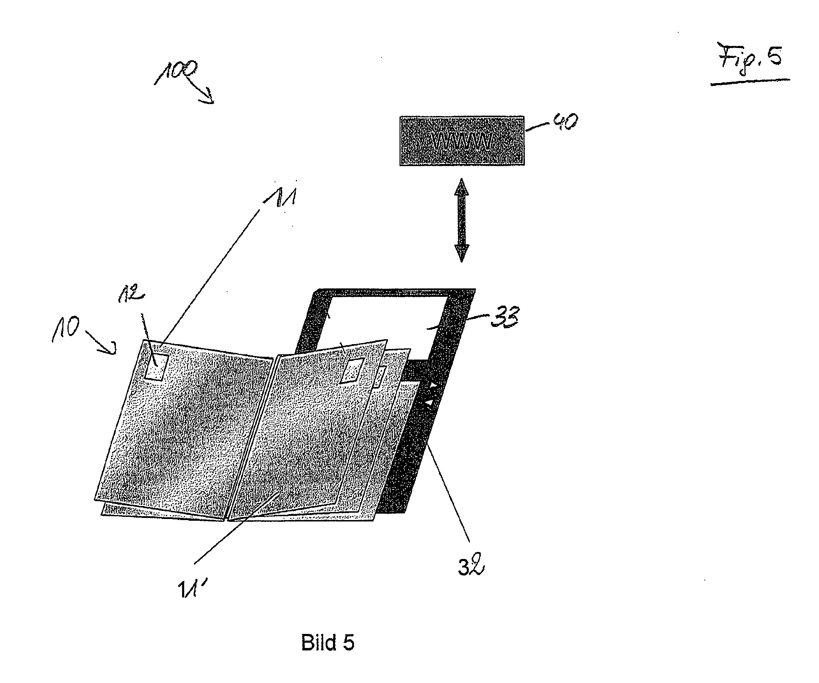

In der Fig. 5 ist eine weitere Ausführung der Erfindung dargestellt, bei welcher ein speziell angefertigtes Ausgabegerät 32 mit einem Bildschirm 33 vorgesehen ist, das gleichzeitig als Interrogator fungiert.

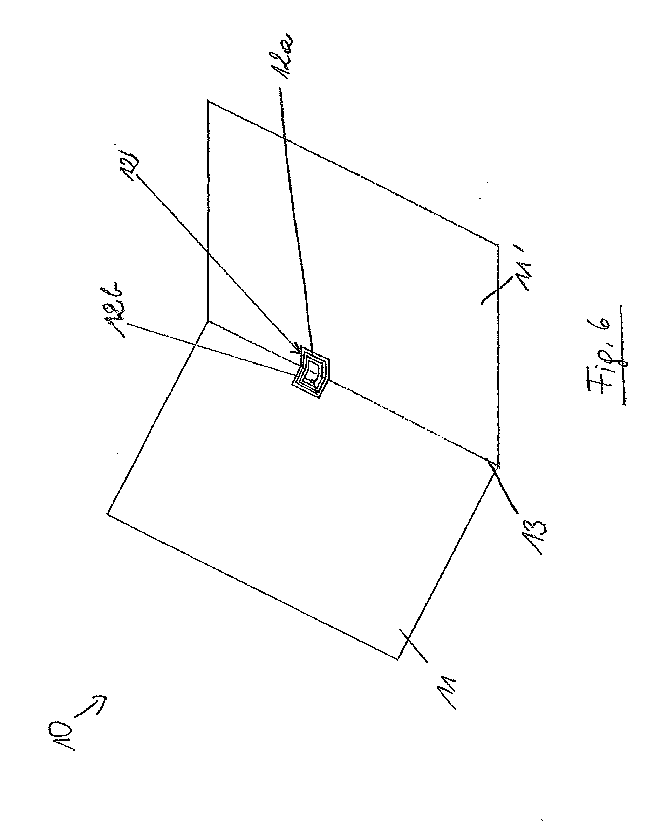

In der Fig. 6 ist ein Beispiel eines Printmediums 10 gezeigt, bei welcher der RFID-Transponder 12', ausgestattet mit einer spiralförmigen RFID-Antenne 12a und einem RFID-Chip 12b, über den Falz 13 zwischen den Seiten 11, 11' des Printmediums 10 angeordnet ist. Durch Auf- und Zuklappen der Seiten 11, 11' wird die RFID-Antenne 12a verbogen, so dass sich ihre Antennencharakteristik verändert. Die Änderung der Antennencharakteristika während des Umblättervorganges ist derart ausgeprägt, dass die Energieversorgung und Kommunikation zwischen RFID-Transponder 12 und Ausleseeinheit 20 beispielsweise in jener Situation unterbrochen ist, bei welcher die Seite 11' nicht sichtbar ist, so dass keine zusätzliche Sensorik zur Seitenerkennung benötigt wird.

Eine kostengünstige Ausführung des Printmediums 10 erfolgt durch die Verwendung eines sog. interaktiven Papiers, bei welchem der RFID-Chip mit gedruckten Schaltungen kombiniert wird. Auf diese Weise können in einem Druckvorgang ganze Papierseiten mit großflächigen Antennen und Sensoren an verschieden Stellen realisiert werden. Durch große Antennen wird die Reichweite des RFID-Transponders verbessert und durch verteilte Sensoren wird das Papier (die Seite bzw. das Blatt des interaktiven Printmediums) interaktiv. Antippen, Überstreichen eines kapazitiven Arrays kann Bewegungen/Verschiebungen auf dem Wiedergabegerät auslösen (ähnlich einem Mouse Pad).

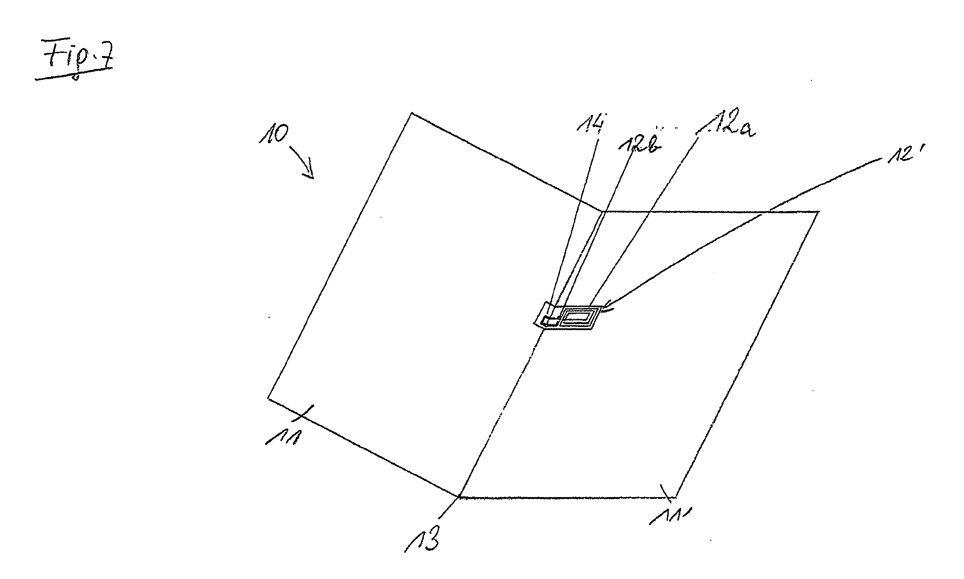

In der Fig. 7 ist ein weiteres Beispiel gezeigt, wobei der RFID-Transponder 12' mit einem Auslöseelement ausgestattet ist. Dieses Auslöseelement ist in diesem Beispiel als Dehnstreifen 14 ausgeführt, der oberhalb des Falzes 13 des Printmediums 10 angeordnet ist, wobei sich beim Aufschlagen der Seite 11 oder Umblättern der Seite 11' dessen ohmscher Widerstand verändert.

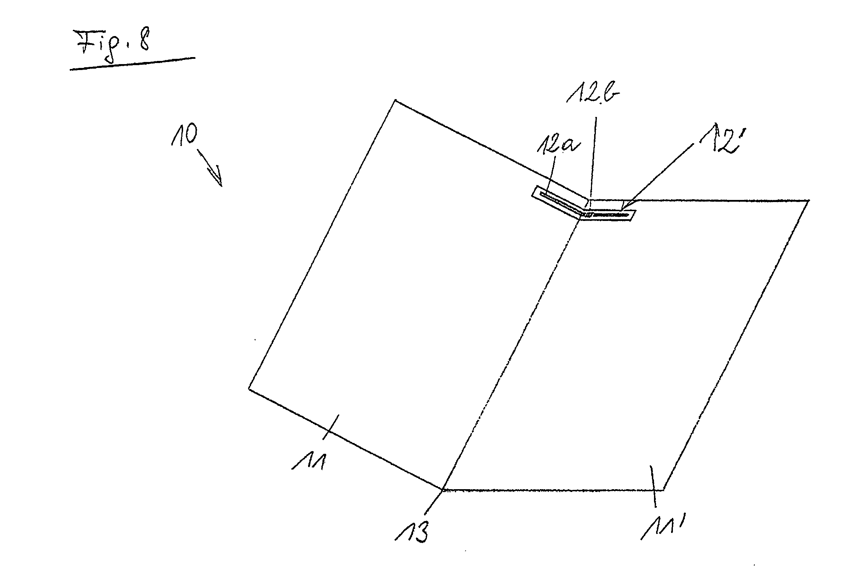

Fig. 8 zeigt ein weiteres Beispiel eines RFID-Transponders 12', der über den Falz 13 angeordnet ist. Die Antenne 12a weist hierbei in eine gestreckte, speziell für höhere Frequenzen (UHF) geeignete Konfiguration auf, deren Antennencharakteristik sich beim Umblättern wiederum verändert. Insbesondere mit Antennen für höhere Frequenzen können auch größere Abstände zwischen interaktivem Printmedium 10 und Interrogator 20 realisiert werden.

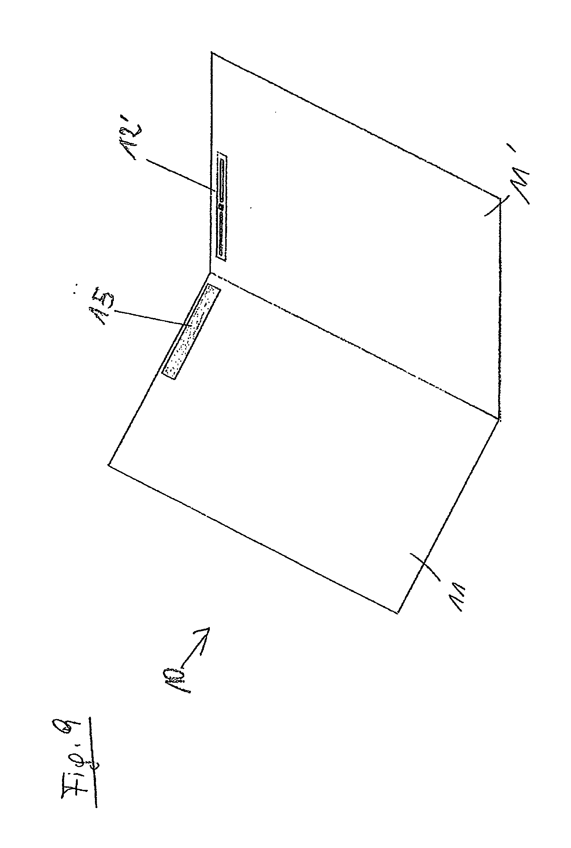

In der Fig. 9 ist beispielsweise der RFID-Transponder 12' aus Fig. 7 zur Gänze auf einer Seite 11' des Printmediums 10 angeordnet, während auf der gegenüberliegenden Seite 11 eine hochfrequente Struktur, nämlich eine Hochfrequenz-aktive Folie 15 angeordnet sind. Die hochfrequente Struktur bewirkt hierbei eine Verstimmung bzw. Deaktivierung der Transponder-Antenne (12a), wenn die Doppelseite geschlossen ist. Erst wenn aufgeblättert wird, kann der Transponder (12') auch beispielsweise von der Rückseite ausgelesen werden.

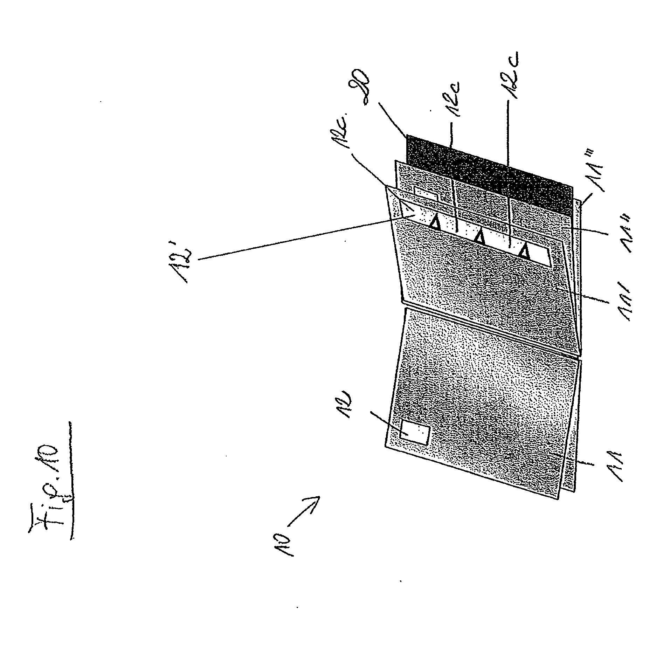

In der Fig. 10 ist ein erfindungsgemässen RFID-Transponder 12' dargestellt, der über drei Tastsensoren in Interaktionsbereichen 12c zum Antippen oder Überstreichen verfügt, um beispielsweise eine Interaktion mit den auf dem Wiedergabegerät 30 dargestellten Zusatzinformationen zu ermöglichen. So kann der Benutzer, ohne sich von dem Printmedium 10 abwenden zu müssen, beispielsweise das Abspielen einer Videodatei beeinflussen. Durch Berühren des RFID-Transponders 12' wird der Antennenkreis der RFID-Antenne 12a verstimmt und es kommt zu einer Veränderung der eingekoppelten Energie, die von dem RFID-Chip 12b erkannt wird und daraufhin ein entsprechendes Signal an den Interrogator weiterleitet. Hierbei sind beispielsweise drei kapazitive Sensoren an unterschiedlichen Anschlusspunkten des Antennenkreises und/oder des Chips 12b angeordnet, deren Berührung eine spezifische Verstimmung des Antennenkreises bzw. eine Funktionsauslösung bewirken.

Ebenso kann vorgesehen sein, dass lediglich ein einziger auf Berührung sensitiver Bereich in dem Interaktionsbereich bzw. als integraler Bestandteil des RFID-Transponders 12' vorgesehen ist, der durch mehrmaliges Berühren des Interaktionsbereiches unterschiedliche Anzeigen auf dem Wiedergabegerät auslöst. Insbesondere können auch rhythmisches Berühren (ähnlich dem "Morsen") unterschiedliche Funktionen bewirken.

Des Weiteren sind in einer weiteren nicht dargestellten Ausführung der Erfindung mehrere Antennenkreise, die einem RFID-Transponder zuzuordnen sind, vorgesehen, deren jeweilige Verstimmung eine unterschiedliche Funktion hervorruft.

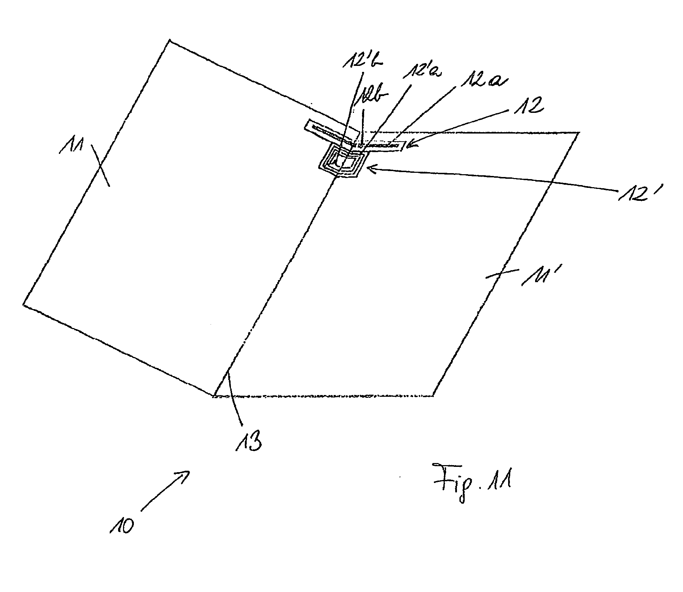

Das in der Fig. 11 gezeigte nicht erfindungsgemäße Printmedium 10 weist zwei über den Falz 13 angeordnete RFID-Transponder 12, 12' mit unterschiedlichen Antennen für unterschiedliche Frequenzen auf. Der erste RFID-Transponder 12 ist mit einer Dipol-UHF-Antenne 12a und einem UHF-Chip 12b ausgestattet, während der zweite RFID-Transponder 12' mit einer Spulen-HF-Antenne 12'a und einem HF-Chip 12'b aufgebaut ist. Die Verwendung von RFID-Transpondern 12, 12' für unterschiedliche Frequenzen hat den Vorteil, dass ein und dasselbe interaktive Printmedium 10 mit verschiedenen Interrogatoren, die mit unterschiedlichen Frequenzen (gegebenenfalls über unterschiedliche Reichweiten) arbeiten, betrieben werden kann. Es ist dann auch möglich, dass, je nachdem mit welcher Frequenz das interaktive Printmedium 10 betrieben wird, unterschiedliche Funktionen unterstützt werden. In einer nicht dargestellten Ausführung ist es auch denkbar, dass ein einzelner RFID-Transponder 12 für mehrere Frequenzen ausgelegt ist, indem sich auf dem einen RFID-Transponder 12 mehrere Antennen 12b befinden, die von einem oder mehreren Chips 12a angesteuert werden.

Insbesondere um Kosten zu reduzieren ist es auch denkbar, dass bei dem erfindungsgemäßen Printmedium 10 ein RFID-Transponder 12 eingesetzt wird, bei dem die Antenne und/oder Sensorik in mindestens einem Chip oder einem Spezialsubstrat integriert sind.

## Patentansprüche

1. Verfahren zum Auslesen von Zusatzinformationen zu zumindest einer Vorder- und/oder Rückseite zumindest eines Blattes (11, 11', 11", 11"') eines interaktiven Printmediums (10), wobei in einer Ausleseeinheit (20) über zumindest ein Signal, das von zumindest einem an zumindest einem Blatt (11, 11', 11", 11"') des Printmediums (10) angeordneten RFID-Transponders (12, 12') mit zumindest einer RFID-Antenne (12a) und zumindest einem RFID-Chip (12b) an die Ausleseeinheit (20) übermittelt wird, zumindest eine Funktion ausgelöst wird, wobei durch Berühren des Benutzers des RFID-Transponders (12, 12') an vorgesehenen Stellen des RFID-Transponders (12, 12') der Antennenkreis der RFID-Antenne (12a) verstimmt wird, und es zu einer Veränderung der eingekoppelten Energie kommt, die von dem RFID-Chip (12b) erkannt wird und daraufhin ein entsprechendes Signal an die Ausleseeinheit (20) weitergeleitet wird, **dadurch gekennzeichnet, dass** unterschiedliche Funktionen in der Ausleseeinheit (20) durch Berührung unterschiedlicher Stellen an dem zumindest einen RFID-Transponder (12, 12') ausgelöst werden und/oder unterschiedliche Funktionen in der Ausleseeinheit (20) durch unterschiedliche Berührungsabfolgen an dem zumindest einen RFID-Transponder (12, 12') ausgelöst werden.

2. Verfahren nach Anspruch 1, **dadurch gekennzeichnet, dass** eine in dem zumindest einen RFID-Chip (12b) des zumindest einen RFID-Transponders (12, 12') abgespeicherte individuelle Information ausgelesen und an das Wiedergabegerät (30, 31) weitergeleitet wird.

3. Verfahren nach Anspruch 1 oder 2, **dadurch gekennzeichnet, dass** die Ausleseeinheit (20) in regelmäßigen Abständen ein vorzugsweise hochfrequentes Feld zur Feststellung der Anwesenheit zumindest eines RFID-Transponders (12, 12') ausbildet.

4. Verfahren nach einem der Ansprüche 1 bis 3, **dadurch gekennzeichnet, dass** das Wiedergabegerät (30, 31) über eine Internetverbindung eine der Seite (11, 11', 11", 11"') zugeordnete Zusatzinformation abruft und anschließend anzeigt.

5. Verfahren nach einem der Ansprüche 1 bis 4, **dadurch gekennzeichnet, dass** neben der individuellen Information eine weitere zumindest einer spezifischen Seite (11, 11', 11", 11"') des Printmediums (10) zugeordnete Zusatzinformation in dem zumindest einen RFID-Chip (12b) abgespeichert ist, die Ausleseeinheit (20) die Zusatzinformation ausliest und an das Wiedergabegerät (30, 31) weiterleitet, worauf anschließend die Zusatzinformation angezeigt wird.

6. Verfahren nach einem der Ansprüche 1 bis 5, **dadurch gekennzeichnet, dass** die Zusatzinformation eine Zugangsberechtigung, insbesondere zu einer Veranstaltung oder einer Sportstätte ist.

7. Verfahren nach einem der Ansprüche 1 bis 6, **dadurch gekennzeichnet, dass** die Ausleseeinheit (20) Daten auf den zumindest einen RFID-Chip (12b) überträgt.

8. Interaktives Printmedium (10), zur Durchführung des Verfahrens nach einem der Ansprüche 1 bis 7, wobei das Printmedium (10) zumindest zwei voneinander durch einen Falz getrennte Blätter (11, 11', 11", 11"') mit jeweils einer Vorder- und einer Rückseite aufweist, und an zumindest einem Blatt (11, 11', 11", 11"') zumindest ein RFID-Transponder (12, 12') mit zumindest einem RFID-Chip (12b) und zumindest einer RFID-Antenne (12a) zur Übermittlung zumindest eines Signals an zumindest eine Ausleseeinheit (20) angeordnet ist, **dadurch gekennzeichnet, dass** zumindest ein Auslöseelement zur Funktionsauslösung vorgesehen ist, das integraler Bestandteil des zumindest einen RFID-Transponders (12) ist, wobei die als Auslöseelement fungierende, zumindest eine RFID-Antenne (12a) vorzugsweise als Dipol-UHF-Antenne ausgebildet ist.

9. Anordnung (100) zum Auslesen von Zusatzinformationen zu zumindest einer Vorder- und/oder Rückseite zumindest eines Blattes (11, 11', 11", 11"') eines interaktiven Printmediums (10) nach Anspruch 8, **dadurch gekennzeichnet, dass** zumindest eine Ausleseeinheit (20) sowie ein Wiedergabegerät (30, 31) für digitale Daten vorgesehen sind, die zumindest eine Ausleseeinheit (20) an zumindest einer Anlagefläche des Printmediums (10) anordenbar ist, wobei die zumindest eine Ausleseeinheit (20) mit dem Wiedergabegerät (30, 31) in Verbindung steht, und die zumindest eine Ausleseeinheit (20) zwischen zwei Blätter (11, 11', 11", 11"') des Printmediums (10) einlegbar ist, oder die zumindest eine Ausleseeinheit (20) unlösbar an der Rückseite des Printmediums (10) angeordnet ist, oder die Ausleseeinheit (20) in einer Schreibtischauflage oder direkt in einer Tischplatte integriert ist, auf die das Printmedium (10) auflegbar ist.

## Claims

1. A method for reading additional information on at least one front side and/or back side of at least one sheet (11, 11', 11", 11"') of an interactive print medium (10), wherein at least one function is triggered in a reading unit (20) via at least one signal, which is transmitted to the reading unit (20) by at least one RFID transponder (12, 12') arranged on at least one sheet (11, 11', 11", 11'") of the print medium (10) and having at least one RFID antenna (12a) and at least one RFID chip (12b), wherein the antenna circuit of the RFID antenna (12a) is detuned by contact of the user of the RFID transponder (12, 12') at intended positions of the RFID transponder (12, 12') and a change in the injected energy occurs, which is recognised by the RFID chip (12b), and thereupon a respective signal is conducted to the reading unit (20), **characterised in that** different functions in the reading unit (20) are triggered by touching different positions on the at least one RFID transponder (12, 12') and/or different functions in the reading unit (20) are triggered by different touch sequences on the at least one RFID transponder (12, 12').

2. A method according to claim 1, **characterised in that** individual information stored in the at least one RFID chip (12b) of the at least one RFID transponder (12, 12') is read out and transmitted to the playback device (30, 31).

3. A method according to claim 1 or 2, **characterised in that** the reading unit (20) forms in regular intervals a preferably high-frequency field for determining the presence of at least one RFID transponder (12, 12').

4. A method according to one of the claims 1 to 3, **characterised in that** the playback device (30, 31) retrieves additional information assigned to the sheet (11, 11', 11", 11"') via an Internet connection and subsequently displays said information.

5. A method according to one of the claims 1 to 4, **characterised in that** in addition to the individual information a further additional information assigned to at least one specific sheet (11, 11', 11", 11"') of the print medium (10) is stored in the at least one RFID chip (12b), the reading unit (20) reads out the additional information and transmits it to the playback device (30, 31), whereupon the additional information is subsequently displayed.

6. A method according to one of the claims 1 to 5, **characterised in that** the additional information is access authorisation, especially to an event or a sports venue.

7. A method according to one of the claims 1 to 6, **characterised in that** the reading unit (20) transmits data to the at least one RFID chip (12b).

8. An interactive print medium (10), for performing the method according to one of the claims 1 to 7, wherein the print medium (10) comprises at least two sheets (11, 11', 11", 11"') having a respective front and rear page and being separated from each other by a fold, and on the at least one sheet (11, 11', 11", 11"') there is arranged at least one RFID transponder (12, 12') with at least one RFID chip (12b) and at least one RFID antenna (12a) for transmitting at least one signal to at least one reading unit (20), **characterised in that** at least one triggering element is provided for triggering a function, which element is an integral component of the at least one RFID transponder (12), wherein the at least one RFID antenna (12a) acting as a triggering element is preferably formed as a dipole UHF antenna.

9. An arrangement (100) for reading additional information on at least one front side and/or back side of at least one sheet (11, 11', 11", 11"') of an interactive print medium (10) according to claim 8, **characterised in that** at least one reading unit (20) and at least one playback device (30, 31) for digital data are provided, wherein the at least one reading unit (20) can be arranged on at least one contact surface of the print medium (10), wherein the at least one reading unit (20) is in connection with the playback device (30, 31), and the at least one reading unit (20) can be placed between two sheets (11, 11', 11", 11"') of the print medium (10), or the at least one reading unit (20) is non-detachably arranged on the rear side of the print medium (10), or the reading unit (20) is integrated in a desk pad or directly in a tabletop on which the print medium (10) can be placed.

## Revendications

1. Procédé pour lire des informations complémentaires à au moins une face avant et/ou au dos d'au moins une feuille (11, 11', 11 ", 11"') d'un support d'impression interactif (10), selon lequel dans une unité de lecture (20) transmet au moins un signal d'au moins un transpondeur RFID (12, 12') installé sur au moins une feuille (11, 11', 11 ", 11"') du support d'impression (10), avec au moins une antenne RFID (12a) et au moins une puce RFID (12b) à l'unité de lecture (20) déclenchant au moins une fonction,
selon lequel le contact tactile du transpondeur RFID (12, 12') par l'utilisateur à des endroits prévus du transpondeur RFID (12, 12') désaccorde le circuit d'antenne de l'antenne RFID (12a) et produit une modification de l'énergie injectée, reconnue par la puce RFID (12b) et ensuite un signal correspondant est transmis à l'unité de lecture (20), **caractérisé en ce que**
par le contact tactile à des endroits différents d'au moins un transpondeur RFID (12, 12'), déclenche des fonctions différentes dans l'unité de lecture (20) et/ou des fonctions différentes dans l'unité de lecture (20) par une succession de contact différents sur au moins un transpondeur RFID (12, 12').

2. Procédé selon la revendication 1,
**caractérisé en ce qu'**
une information individuelle enregistrée dans au moins une puce RFID (12b) d'au moins un transpondeur RFID (12, 12') est lue et transmise à l'appareil de reproduction (30, 31).

3. Procédé selon la revendication 1 ou 2,
**caractérisé en ce que**
à des intervalles réguliers, l'unité de lecture (20) émet de préférence un champ hautes fréquences pour constater la présence d'au moins un transpondeur RFID (12, 12').

4. Procédé selon l'une des revendications 1 à 3,
**caractérisé en ce que**
l'appareil de reproduction (30, 31) appelle une information complémentaire associée à l'une des pages (11, 11', 11 ", 11"') par une liaison par internet et affiche ensuite cette information complémentaire.

5. Procédé selon l'une des revendications 1 à 4,
**caractérisé en ce qu'**
à côté de l'information individuelle, une autre information complémentaire associée à une page spécifique (11, 11', 11 ", 11'") du support d'impression (10) est enregistrée dans au moins une puce RFID (12b), l'unité de lecture (20) lisant l'information complémentaire et la transmettant à l'appareil de reproduction (30, 31) puis l'information complémentaire est affichée.

6. Procédé selon l'une des revendications 1 à 5,
**caractérisé en ce que**
l'information complémentaire est une autorisation d'accès, notamment à une manifestation ou à une enceinte sportive.

7. Procédé selon l'une des revendications 1 à 6,
**caractérisé en ce que**
l'unité de lecture (20) transmet les données vers au moins une puce RFID (12b).

8. Support d'impression interactif (10) pour la mise en oeuvre du procédé selon l'une des revendications 1 à 7,
le support d'impression (10) ayant au moins deux feuilles (11, 11', 11", 11'") séparées l'une de l'autre par un pli et ayant chacune un côté avant et un dos et au moins l'une des feuilles (11, 11', 11 ", 11"') comporte au moins un transpondeur RFID (12, 12') avec au moins une puce RFID (12b) et au moins une antenne RFID (12a) pour transmettre au moins un signal vers au moins une unité de lecture (20),
support **caractérisé en ce qu'**il est prévu
au moins un élément de déclenchement pour déclencher le fonctionnement qui fait partie intégrante du transpondeur RFID (12),
au moins une antenne RFID (12a) fonctionnant comme élément de déclenchement étant de préférence réalisée sous la forme d'une antenne dipôle-UHF.

9. Dispositif (100) pour lire des informations complémentaires sur au moins le côté avant et/ou le dos d'une feuille (11, 11', 11", 11'") d'un support d'impression interactif (10) selon la revendication 8,
**caractérisé en ce qu'**
il comporte au moins une unité de lecture (20) et un appareil de reproduction (30, 31) de données numériques, l'unité de lecture (20) étant susceptible d'être installée sur au moins une surface du support d'impression (10), et cette unité de lecture (20) est reliée à l'appareil de reproduction (30, 31) et au moins une unité de lecture (20) peut se placer entre deux feuilles (11, 11', 11 ", 11"') du support d'impression (10) ou au moins une unité de lecture (20) est installée de manière solidaire au dos du support d'impression (10) ou l'unité de lecture (20) est intégrée dans un élément placé sur le bureau ou directement dans le plateau du bureau sur lequel se place le support d'impression (10).
